# EUROPEAN PATENT APPLICATION

(11) **EP 4 845 160 A1**
(43) Date of publication of application: **25.11.2026**
(21) Application number: 25741553.9
(22) Date of filing: 15.01.2025
(51) Int. Cl.: H04N 21/2187, H04N 21/4788, H04N 21/472, H04N 21/431, H04N 21/458

(54) **INTERACTION METHOD AND APPARATUS, AND DEVICE AND STORAGE MEDIUM**

(30) Priority: 15.01.2024 CN 202410058616
(71) Applicant: Beijing Zitiao Network Technology Co., Ltd., Beijing 100190 (CN)
(72) Inventor: SHAO, Ziyu, Beijing 100028 (CN); LI, Meilin, Beijing 100028 (CN)
(74) Representative: Marks & Clerk LLP
(86) International application number: PCT/CN2025/072612
(87) International publication number: WO 2025/152992

(57) **Abstract**

Embodiments of the disclosure relate to a method, apparatus, device, and storage medium for interaction. The method proposed includes: displaying a target interface associated with a target virtual resource, the target interface displaying a set of interactive resources associated with the target virtual resource, the set of interactive resources being configured for interaction in a live stream; and updating a visual content corresponding to the target virtual resource in response to historical interaction information associated with the set of interactive resources satisfying a target condition. In this way, the embodiments of the disclosure are able to support a user in obtaining different visual contents of the target virtual resource by completing interactions with specific interactive resources in the live stream, thereby facilitating the user to perceive the historical interaction information, and further enhancing the interactive experience.

## Description

The present application claims priority to Chinese Patent Application No. 202410058616.8, filed on January 15, 2024, and entitled "METHOD, APPARATUS, DEVICE, AND STORAGE MEDIUM FOR INTERACTION ", which is incorporated herein by reference in its entirety.

### TECHNICAL FIELD

Example embodiments of the disclosure generally relate to the field of computers, and in particular, to a method, apparatus, device, and computer-readable storage medium for interaction.

### BACKGROUND

With the development of computer technologies, the Internet has become an important source for people to obtain various contents. The live streaming technology, which utilizes the Internet and streaming media technologies to spread contents, has been developing rapidly. People may carry out various types of interactions through live streams and obtain rich types of information through the live streams.

### SUMMARY

In a first aspect of the disclosure, a method for interaction is provided. The method includes displaying a target interface associated with a target virtual resource, the target interface displaying a set of interactive resources associated with the target virtual resource, the set of interactive resources being configured for interaction in a live stream; and updating a visual content corresponding to the target virtual resource in response to historical interaction information associated with the set of interactive resources satisfying a target condition.

In a second aspect of the disclosure, an apparatus for interaction is provided. The apparatus includes a displaying module configured to display a target interface associated with a target virtual resource, the target interface displaying a set of interactive resources associated with the target virtual resource, the set of interactive resources being configured for interaction in a live stream; and an updating module configured to update a visual content corresponding to the target virtual resource in response to historical interaction information associated with the set of interactive resources satisfying a target condition.

In a third aspect of the disclosure, an electronic device is provided. The device includes at least one processing unit; and at least one memory, the at least one memory being coupled to the at least one processing unit and storing instructions executable by the at least one processing unit, the instructions, when executed by the at least one processing unit, causing the device to perform the method of the first aspect.

In a fourth aspect of the disclosure, a computer-readable storage medium is provided. The computer-readable storage medium has a computer program stored thereon, the computer program being executable by a processor to perform the method of the first aspect.

It should be appreciated that the content described in the Summary section of the disclosure is neither intended to identify key or essential features of the embodiments of the disclosure, nor is it intended to limit the scope of the disclosure. Other features of the disclosure will be readily envisaged through the following description.

### BRIEF DESCRIPTION OF THE DRAWINGS

The above and other features, advantages and aspects of the embodiments of the disclosure will become more apparent when taken in conjunction with the drawings and with reference to the following detailed description. In the drawings, the same or similar reference symbols refer to the same or similar elements, where:
Fig. 1 illustrates a schematic diagram of an example environment in which embodiments according to the disclosure may be implemented;
Figs. 2A to 2D illustrate example interfaces according to some embodiments of the disclosure;
Figs. 3A to 3C illustrate example interfaces according to some embodiments of the disclosure;
Figs. 4A to 4B illustrate example interfaces according to some embodiments of the disclosure;
Fig. 5 illustrates a flowchart of an example interaction process according to some embodiments of the disclosure;
Fig. 6 illustrates a schematic structural block diagram of an example apparatus for interaction according to some embodiments of the disclosure; and
Fig. 7 illustrates a block diagram of an electronic device capable of implementing multiple embodiments of the disclosure.

### DETAILED DESCRIPTION OF EMBODIMENTS

The embodiments of the disclosure will be described in more detail below with reference to the drawings. Although some embodiments of the disclosure are shown in the drawings, it would be appreciated that the disclosure may be implemented in various forms and should not be construed as limited to the embodiments set forth herein. On the contrary, these embodiments are provided for a more thorough and complete understanding of the disclosure. It would be appreciated that the drawings and the embodiments of the disclosure are only for illustrative purposes and are not intended to limit the scope of the disclosure.

It should be noted that any section/subsection title provided herein is not restrictive. Various embodiments are described throughout this disclosure, and any type of embodiments may be included under any section/subsection. In addition, the embodiments described in any section/subsection may be combined in any way with any other embodiments described in the same section/subsection and/or different sections/subsections.

In the description of the embodiments of the disclosure, the term "include/comprise" and like terms thereof should be understood as open-ended inclusions, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. The terms "first", "second" and the like may refer to different or same objects. Other explicit and implicit definitions may also be included below.

The embodiments of the disclosure may involve user data, data acquisition and/or use, and the like. These aspects all follow the corresponding laws, regulations and provisions. In the embodiments of the disclosure, all data collection, acquisition, processing, forwarding, use, and the like are carried out on the premise that the user knows and confirms. Accordingly, when implementing the embodiments of the disclosure, the user should be informed of the type, scope of use, usage scenarios, and the like, of the data or information that may be involved and authorization of the user should be obtained in an appropriate manner according to relevant laws and regulations. The specific method of notifying and/or authorizing may vary according to the actual situation and application scenarios, and the scope of the disclosure is not limited in this regard.

The solutions and the embodiments in this specification, if personal information processing is involved, the processing of the personal information is on the premise of having a legal basis (for example, consent has been obtained from the personal information subject or required for the performance of a contract, and the like), and will only be processed within the prescribed or agreed scope. A user's refusal to provide personal information other than the necessary information required for the basic functions will not affect the user ability to use of the basic functions.

Live streaming has become an important form of Internet interaction. People may initiate live streaming, for example, and become the host of a live stream, or, people may also join other live streams to obtain corresponding live streaming content.

In some scenarios, a user may initiate, for example, an interactive operation related to an interactive resource in a live stream,. Such an interactive resource may include, for example, a virtual gift, and the like. However, during such an interaction process, it is difficult for the user to perceive the historical interaction regarding the interactive resource, which in turn affects the interactive experience of the user.

Embodiments of the disclosure propose an interaction solution. According to the solution, a target interface associated with a target virtual resource may be displayed, the target interface displaying a set of interactive resources associated with the target virtual resource, the set of interactive resources configured for interaction in a live stream. Further, a visual content corresponding to the target virtual resource may be updated in response to historical interaction information associated with the set of interactive resources satisfying a target condition.

In this way, the embodiments of the disclosure are able to support the user in obtaining different visual contents of the target virtual resource by completing the interactions with the specific interactive resources in the live stream, thereby facilitating the user to perceive the historical interaction information, and further enhancing the interactive experience.

Various example embodiments of the solution will be described in detail below in conjunction with the drawings.

### Example Environment

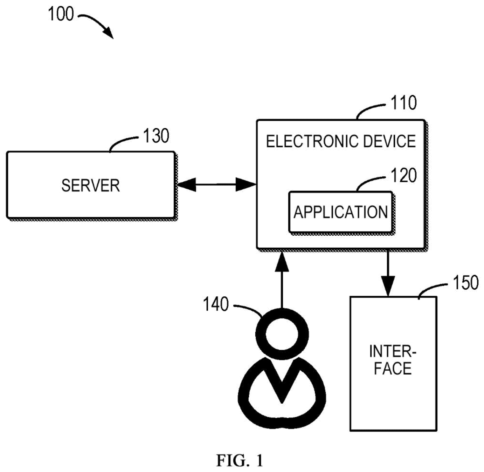

Fig. 1 shows a schematic diagram of an example environment 100 in which the embodiments of the disclosure may be implemented. As shown in Fig. 1, the example environment 100 may include an electronic device 110.

In the example environment 100, an application 120 supporting interface interaction may run on the electronic device 110. The application 120 may be any suitable type of application for interface interaction, examples of which may include, but are not limited to, a video application, a social application, or other suitable applications. A user 140 may interact with the application 120 via the electronic device 110 and/or its attached devices.

In the environment 100 of Fig. 1, if the application 120 is active, the electronic device 110 may present an interface 150 for supporting the interface interaction via the application 120.

In some embodiments, the electronic device 110 communicates with a server 130 to implement the provision of services of the application 120. The electronic device 110 may be any type of mobile terminal, fixed terminal or portable terminal, including a mobile phone, a desktop computer, a laptop computer, a notebook computer, a netbook computer, a tablet computer, a media computer, a multimedia tablet, a palmtop computer, a portable game terminal, a VR/AR device, a Personal Communication System (PCS) device, a personal navigation device, a Personal Digital Assistant (PDA), an audio/video player, a digital camera/video camera, a positioning device, a TV receiver, a radio broadcast receiver, an e-book device, a game device, or any combination of the foregoing, including fittings and peripherals of these devices or any combination thereof. In some embodiments, the electronic device 110 may also support any type of user-specific interface (such as "wearable" circuitry, and the like).

The server 130 may be an independent physical server, a server cluster or a distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and so on. The server 130 may provide background services for the application 120 supporting a virtual scene in the electronic device 110.

A communication connection may be established between the server 130 and the electronic device 110. The communication connection may be established by wired or wireless means. The communication connection may include, but is not limited to, a Bluetooth connection, a mobile network connection, a Universal Serial Bus (USB) connection, a Wireless Fidelity (WiFi) connection, and the like, and the embodiments of the disclosure are not limited in this regard. In the embodiments of the disclosure, the server 130 and the electronic device 110 may implement signaling interaction through the communication connection therebetween.

It should be appreciated that the structure and functions of the elements in the environment 100 are described for illustrative purposes only, without suggesting any limitation to the scope of the disclosure.

Some example embodiments of the disclosure will be described below with continued reference to the drawings.

### Example Interaction

An example interaction process according to the embodiments of the disclosure will be described below with reference to the drawings.

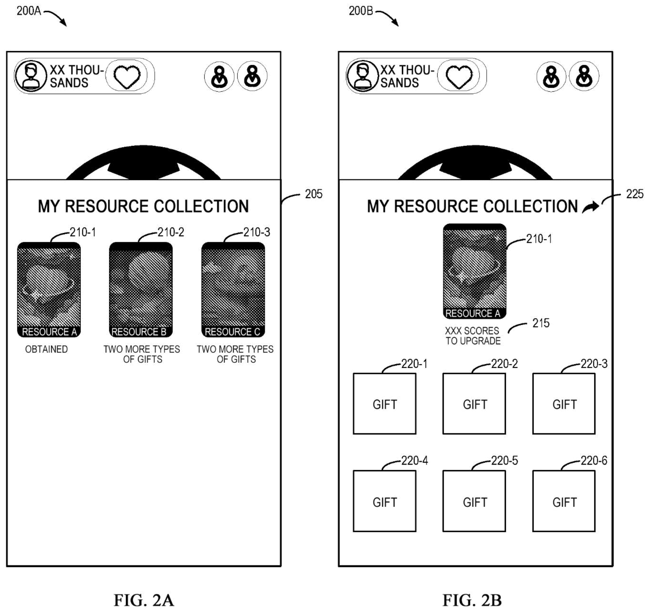

Figs. 2A to 2D show example interfaces 200A to 200D according to some embodiments of the disclosure. The interfaces 200A to 200D may be provided by the electronic device 110 shown in Fig. 1.

As shown in Fig. 2A, the interface 200A may correspond to a live streaming interface of a live stream, for example. The electronic device 110 may display a panel 205 in the interface 200A. The panel 205 may display, for example, a set of virtual resources, such as a virtual resource 210-1, a virtual resource 210-2, and a virtual resource 210-3 (individually or collectively referred to as virtual resources 210).

In some embodiments, the virtual resources 210 may include one or more virtual resources preset in a platform. As an example, such virtual resources 210 may include any suitable virtual resources such as a collection, a badge, a title, and the like. For example, as shown in Fig. 2A, the virtual resources 210 may include different collections.

In some embodiments, the user may obtain or update such virtual resources 210 by completing corresponding actions. Taking Fig. 2A as an example, the virtual resource 210-1 may be, for example, a virtual resource that has been obtained by the user, and the virtual resource 210-2 and the virtual resource 210-3 are virtual resources that have not been obtained by the user for the time being.

In some embodiments, the virtual resources 210 in different states may have different display styles. For example, the obtained virtual resource 210-1 may be displayed in a colored style, while the yet-to-be-obtained virtual resource 210-2 or virtual resource 210-3 may be displayed in a black-and-white style.

Further, the electronic device 110 may present prompt information in association with the virtual resources 210 to indicate their obtaining state or operations still required to be performed to obtain the virtual resources 210.

Further, after receiving the selection of the virtual resource 210-1, the electronic device 110 may present the interface 200B as shown in Fig. 2B. As shown in Fig. 2B, the interface 200B may present a set of interactive resources associated with the virtual resource 210-1, such as interactive resources 220-1 to 220-6 (individually or collectively referred to as interactive resources 220).

In some embodiments, the interactive resources 220 may include various suitable interactive resources for live stream interaction, such as virtual gift resources, and the like.

In some embodiments, the virtual resource 210-1 may be associated with a predetermined number of interactive resources 220. If the user completes the interactive operations with the predetermined number of interactive resources 220 within a predetermined period of time, the virtual resource 210-1 may be provided to the user.

In some embodiments, the set of interactive resources 220 may be determined based on, for example, user configuration operations. For example, only the number of interactive resources 220 required to be associated with the virtual resource 210-1 may be limited, and the specific interactive resources 220 may be determined based on a user adding operation.

In some embodiments, the virtual resource 210-1 may also be associated with different levels, for example. As shown in Fig. 2B, the electronic device 110 may further present prompt information 215 to indicate the conditions required for obtaining the virtual resource 210-1 or upgrading the level of the virtual resource 210-1.

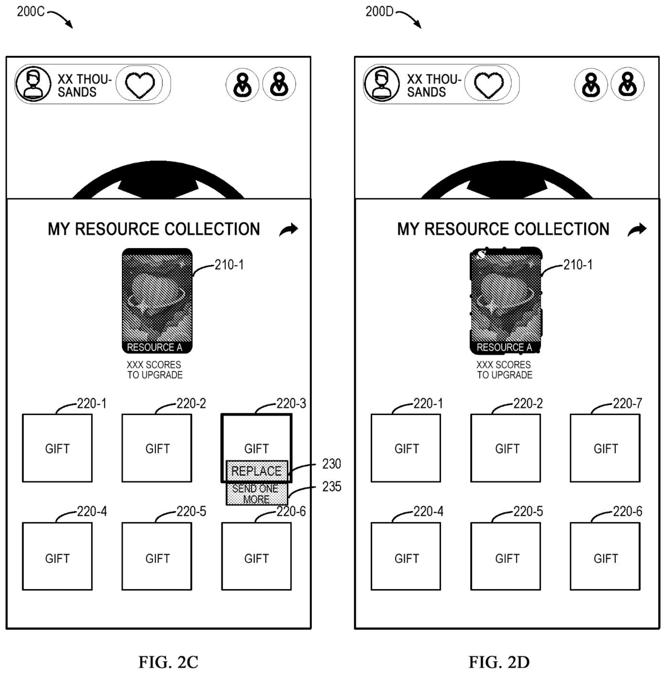

Further, as shown in Fig. 2C, upon receiving the selection of the interactive resource 220-3, the electronic device 110 may display an entry 230 and an entry 235.

In some embodiments, upon receiving a selection of the entry 230, the electronic device 110 may present a set of candidate interactive resources, and may replace the interactive resource 220-3 with a specific interactive resource based on the user's selection of the specific interactive resource.

Further, an attribute of the virtual resource 210-1 may be re-determined based on the historical interaction information associated with the replaced set of interactive resources. As shown in Fig. 2D, after the interactive resource 220-3 is replaced with an interactive resource 220-7, the attribute of the virtual resource 210-1 may be accordingly determined based on the user's historical interaction information regarding the new set of interactive resources.

Taking Fig. 2D as an example, the new set of interactive resources may correspond for example, to a higher interaction value, and may for example, cause the level of the virtual resource 210-1 to be upgraded. Accordingly, the electronic device 110 may present an updated visual content of the virtual resource 210-1. For example, the updated visual content may have a different display style, such as a different border, a different color scheme, and the like. Alternatively, the updated visual content may have different display contents, for example, an indication element corresponding to the updated level may be presented in the upper left corner of the updated visual content.

Continuing with reference to Fig. 2C, upon receiving a selection of the entry 235, the electronic device 110 may trigger an interactive event associated with the selected interactive resource 220-3 in the target live stream. For example, taking the interactive resource 220-3 as a virtual gift as an example, the electronic device 110 may trigger to gifting the virtual gift to the target live stream.

In some embodiments, after the occurrence of the interactive event, the historical interaction information corresponding to the set of interactive resources 220 may be updated, thereby triggering the attribute of the virtual resource 210-1 to be updated. For example, after the user gifts a predetermined number of interactive resources 220, the level of the virtual resource 210-1 may be upgraded. Accordingly, as shown in Fig. 2D, the visual content of the virtual resource 210-1 may be updated accordingly.

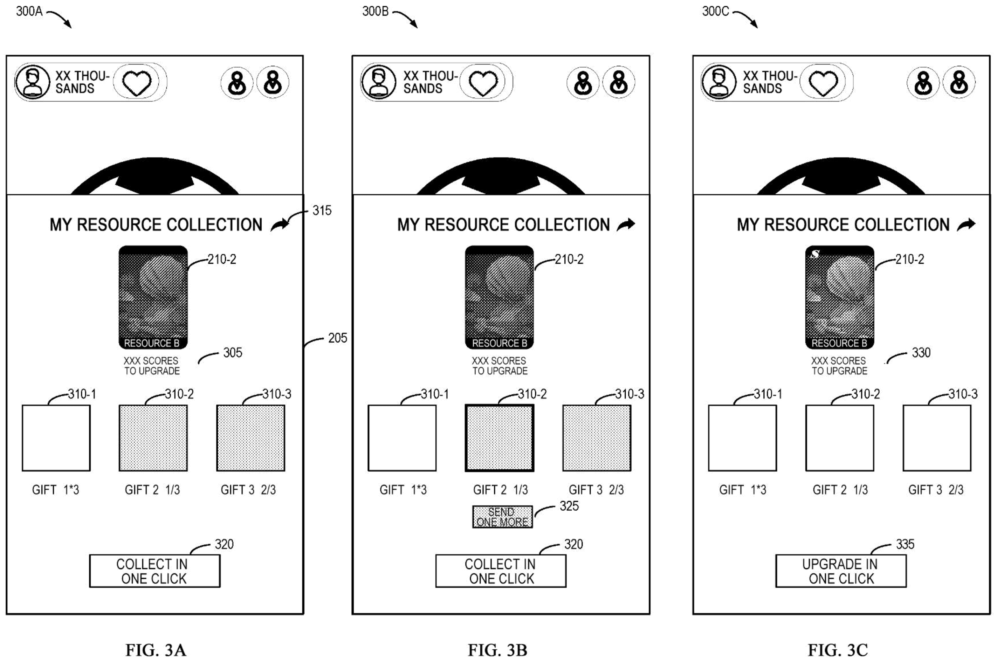

As another example, upon receiving a selection of the virtual resource 210-2 as shown in Fig. 2A, the electronic device 110 may display an interface 300A as shown in Fig. 3A.

As shown in Fig. 3A, the virtual resource 210-2 is, for example, in a yet-to-be-obtained state. The electronic device 110 may present prompt information 305 to indicate, for example, the conditions required to obtain the virtual resource 210-2.

As shown in Fig. 3A, the electronic device 110 may display a set of interactive resources corresponding to the virtual resource 210-1 in the interface 300A, such as an interactive resource 310-1, an interactive resource 310-2, and an interactive resource 310-3 (individually or collectively referred to as interactive resources 310).

In some embodiments, the set of interactive resources 310 may include, for example, one or more preset interactive resources 310. In some examples, the set of interactive resources 310 may be associated with the same theme, such as a holiday theme.

Additionally, whether the virtual resource 210-2 satisfies an obtaining condition and/or an upgrade condition may be determined based on historical interaction information of the set of interactive resources 310. As shown in Fig. 3A, the condition for obtaining the virtual resource 210-2 may include that the number of times the interactive resource 310-1, the interactive resource 310-2 or the interactive resource 310-3 have been gifted within a preset period of time reaches 3.

Further, the electronic device 110 may also present, in association with the interactive resources 310, whether the corresponding conditions of the interactive resource 310 are satisfied. For example, the number of times the interactive resource 310-1 has been gifted reaches 3, and the interactive resource 310-2 and the interactive resource 310-3 have been gifted 1 once and twice, respectively, not reaching the corresponding conditions.

In some examples, the electronic device 110 may further determine the display style of the interactive resources 310 based on whether the corresponding conditions to the interactive resources 310 are satisfied. For example, for the interactive resource 310-1 whose condition has been satisfied, the electronic device 110 may display it in a colored style; on the contrary, for the interactive resource 310-2 and the interactive resource 310-3 whose conditions have not yet been satisfied, the electronic device 110 may display them in a black-and-white style.

Further, as shown in Fig. 3A, the electronic device 110 may further provide an interactive entry 320. Upon receiving a selection of the interactive entry 320, the electronic device 110 may trigger a specific interactive event in the live stream, and the specific interactive event may be associated with the interactive resource 310-2 and the interactive resource 320-3 in the set of interactive resources 310 whose conditions have not yet been satisfied.

For example, the electronic device 110 may trigger gifting 2 interactive resources 310-2 and 1 interactive resource 310-3 based on the selection of the interactive entry 320, thereby enabling the historical interaction information of the set of interactive resources 310 to satisfy the target condition corresponding to the virtual resource 210-2.

In some embodiments, as shown in Fig. 3B, upon receiving a selection of the interactive resource 310-2, the electronic device 110 may further display an interactive entry 325. Similarly, upon receiving a selection of the interactive entry 325, the electronic device 110 may trigger an interactive event corresponding to the interactive resource 310-2 in the live stream, for example, gifting the interactive resource 310-2 to the live stream.

Further, in the case that the historical interaction information corresponding to the set of interactive resources 310 satisfies the target condition corresponding to the virtual resource 210-2, the electronic device 110 may update the visual content of the virtual resource 210-2 to indicate that the virtual resource 210-2 has been obtained or updated.

As shown in Fig. 3C, the electronic device 110 may update the visual content of the virtual resource 210-2 to indicate that the virtual resource 210-2 has been obtained. For example, the updated visual content may have a different display style, such as a different border, a different color scheme, and the like. Alternatively, the updated visual content may have different display contents, for example, an indication element corresponding to the updated level may be presented in the upper left corner of the updated visual content.

Further, the electronic device 110 may further display prompt information 330 to indicate the target condition that needs to be satisfied for the virtual resource 210-2 to reach the next level. Accordingly, the electronic device 110 may provide an interactive entry 330 to facilitate completion of the target condition.

In some embodiments, as shown in Figs. 2B and 3A, the electronic device 110 may further provide a sharing entry 225 and a sharing entry 315 to support the user in sharing information corresponding to the corresponding virtual resource 210-1 or virtual resource 210-2.

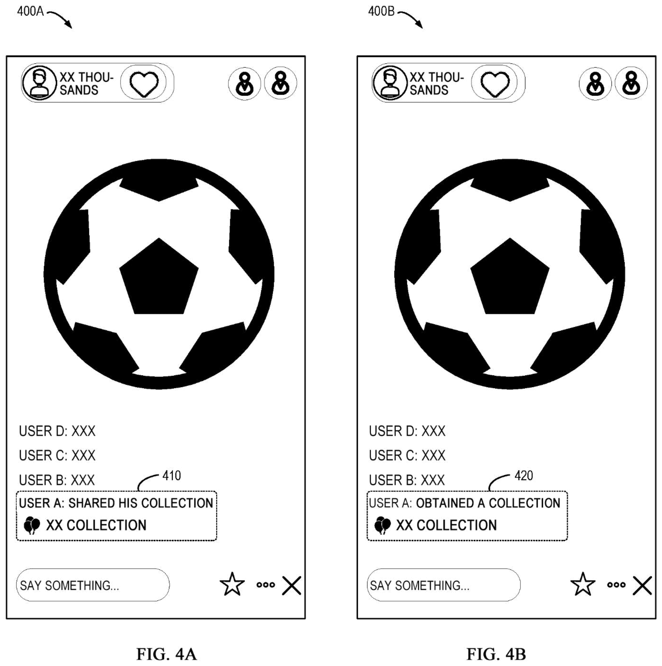

Taking the sharing entry 225 as an example, the electronic device 110 may share the virtual resource 210-1 to the live stream based on a selection of the sharing entry 225. As shown in Fig. 4A, the electronic device 110 may send a message 410 in the live stream based on the selection of the sharing entry 225.

In some embodiments, the message 410 may support, for example, guidance to a viewing interface corresponding to the virtual resource 210-1. For example, in the case that other users in the live stream select the message 410, the client may jump to a viewing interface that displays the virtual resource 210-1 of "User A" to present at least the description information of the virtual resource 210-1, such as visual content, level information, the set associated with the interactive resources, historical interaction information of the set of interactive resources, and the like.

In some embodiments, the electronic device 110 may also post a work (e.g., a picture work or a video work) corresponding to the virtual resource 210-1 based on the selection of the sharing entry 225.

In some embodiments, the electronic device 110 may also generate an image associated with the virtual resource 210-1. The image may present, for example, the visual content corresponding to the target virtual resource. In some examples, the visual content may change based on the attribute (e.g., level) of the virtual resource 210-1; or, different levels of the virtual resource 210-1 may correspond to the same visual content.

In some embodiments, the image may further present the set of interactive resources associated with the target virtual resource and/or historical interaction information associated with the set of interactive resources. Taking the gift resource as an example of the interactive resource, the image may present the number of times each gift resource has been gifted within a predetermined period of time.

In some embodiments, the image may further present an access entry for accessing the viewing interface of the virtual resource 210-1. For example, the image may include an access link or a barcode for jumping to the viewing interface. The viewing interface may, for example, be the same as the viewing interface guided to based on the message 410.

In some embodiments, as shown in Fig. 4B, if the target condition corresponding to the virtual resource 210 is reached, the electronic device 110 may further send a message 420 in the live stream. For example, if the user obtains the virtual resource 210-2, the electronic device 110 may send the message 420 in the live stream to indicate that "User A" has obtained the virtual resource 210-2. Similarly, the message 420 may, for example, also be used to guide to the viewing interface of the virtual resource 210-2.

In some examples, when other attributes of the virtual resource 210 change, the electronic device 110 may also send a corresponding message in the live stream. For example, when the level of the virtual resource 210-1 changes, the electronic device 110 may also send a message indicating that the user has upgraded the virtual resource 210-1.

In some embodiments, the electronic device 110 may, for example, further support the user in sharing the virtual resource 210 via other appropriate entry. For example, the electronic device 110 may provide a sharing entry of a specific virtual resource 210 in an input control of the live stream. The specific virtual resource 210 may, for example, be the virtual resource 210 that the user has already obtained and that has the highest level. After receiving a selection of the sharing entry, the electronic device 110 may send a message in the live stream similar to Fig. 4A.

In some embodiments, in order to further facilitate achieving the target condition corresponding to the virtual resource, the electronic device 110 may further display a plurality of interactive resources in a resource panel of the live stream. Taking the gift resource as an example of the interactive resource, the electronic device 110 may display a gift panel.

Further, the electronic device 110 may display prompt information in the resource panel based on a selection of a specific interactive resource from the plurality of interactive resources, where the specific interactive resource is associated with a specific virtual resource 210. In some examples, the prompt information may indicate a completion state of the target condition associated with the specific virtual resource 210.

For example, the electronic device 110 may display the prompt information based on the user's selection of a specific gift resource to indicate how many more specific gift resources need to be gifted to obtain or upgrade the corresponding virtual resource.

In some embodiments, the electronic device 110 may, for example, further support the user in viewing historical information of the virtual resource 210. For example, the attribute of the virtual resource 210 (e.g., whether it has been obtained, the level, and the like) may be determined based on interactions within a predetermined time period (e.g., weekly). The electronic device 110 may present the historical information of the virtual resource 210 in the historical time period based on the user's viewing request, such as whether the virtual resource 210 has been obtained, the highest level of the virtual resource 210, and the like.

Based on the process described above, the embodiments of the disclosure are able to support the user in obtaining different visual contents of the target virtual resource by completing interactions with specific interactive resources in the live stream, thereby facilitating the user to perceive of the historical interaction information, and further enhancing the interactive experience.

### Example Process

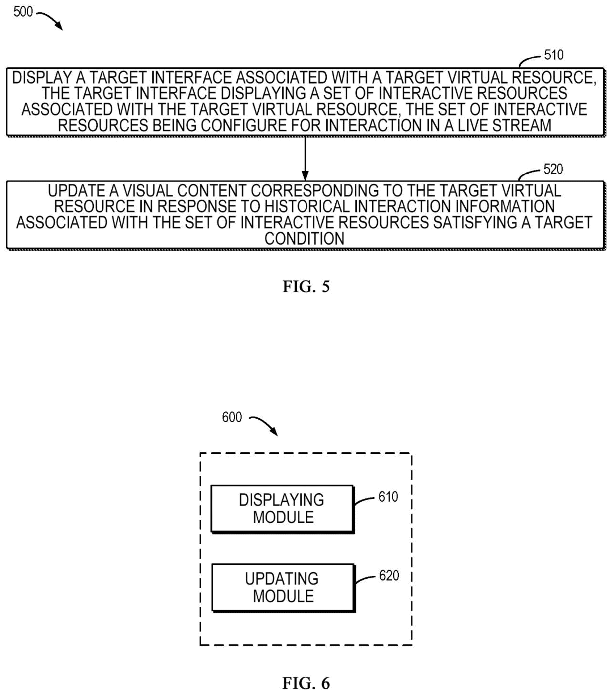

Fig. 5 shows a flowchart of an example interaction process 500 according to some embodiments of the disclosure. The process 500 may be implemented at the electronic device 110. The process 500 will be described below with reference to Fig. 1.

As shown in the figure, at block 510, the electronic device 110 displays a target interface associated with a target virtual resource, the target interface displaying a set of interactive resources associated with the target virtual resource, the set of interactive resources being configured for interaction in a live stream.

At block 520, the electronic device 110 updates a visual content corresponding to the target virtual resource in response to historical interaction information associated with the set of interactive resources satisfying a target condition.

In some embodiments, the set of interactive resources is determined based on a user configuration operation.

In some embodiments, the historical interaction information is first historical interaction information, and the process 500 further includes: receiving an operation for replacing a first interactive resource in the set of interactive resources with a second interactive resource; and determining the visual content corresponding to the target virtual resource based on second historical interaction information, the second historical interaction information being associated with the replaced set of interactive resources.

In some embodiments, the set of interactive resources includes a plurality of preset interactive resources.

In some embodiments, the plurality of preset interactive resources are associated with a same theme.

In some embodiments, the target condition indicates that a number of historical interactions of each interactive resource in the set of interactive resources reaches a threshold number.

In some embodiments, the process 500 further includes: providing a first interactive entry in the target interface, the first interactive entry being associated with a third interactive resource in the set of interactive resources; and triggering a first interactive event in the target live stream based on a selection of the first interactive entry, the first interactive event being associated with the third interactive resource.

In some embodiments, the process 500 further includes: providing, in response to the historical interaction information associated with the set of interactive resources not satisfying the target condition, a second interactive entry in the target interface; triggering a second interactive event in the target live stream based on a selection of the second interactive entry, the second interactive event causing the historical interaction information associated with the set of interactive resources to satisfy the target condition; and updating the visual content corresponding to the target virtual resource.

In some embodiments, the process 500 further includes: sending, in response to the historical interaction information associated with the set of interactive resources satisfying the target condition, a first message associated with the target virtual resource in the target live stream.

In some embodiments, the target interface further includes a sharing entry, and the process 500 further includes, based on a selection of the sharing entry: sending a second message associated with the target virtual resource in the target live stream; posting a work associated with the target virtual resource; or generating an image associated with the target virtual resource.

In some embodiments, the image presents at least one of the following: the visual content corresponding to the target virtual resource, the set of interactive resources associated with the target virtual resource, the historical interaction information associated with the set of interactive resources, and an access entry for accessing a viewing interface of the target virtual resource.

In some embodiments, the second message is further configured to guide to the viewing interface of the target virtual resource.

In some embodiments, the process 500 further includes: displaying a resource panel, the resource panel displaying a plurality of interactive resources; and displaying prompt information in the resource panel based on a selection of a fourth interactive resource from the plurality of interactive resources, the fourth interactive resource being associated with the target virtual resource, the prompt information indicating a completion state of the target condition associated with the target virtual resource.

### Example Apparatus and Device

An embodiment of the disclosure further provides a corresponding apparatus for implementing the above method or process. Fig. 6 shows a schematic structural block diagram of an example apparatus for interaction 600 according to some embodiments of the disclosure. The apparatus 600 may be implemented or included in the electronic device 110. Each module/component in the apparatus 600 may be implemented by hardware, software, firmware, or any combination thereof.

As shown in Fig. 6, the apparatus 600 includes a displaying module 610 configured to display a target interface associated with a target virtual resource, the target interface displaying a set of interactive resources associated with the target virtual resource, the set of interactive resources being configured for interaction in a live stream; and an updating module 620 configured to update a visual content corresponding to the target virtual resource in response to historical interaction information associated with the set of interactive resources satisfying a target condition.

In some embodiments, the set of interactive resources is determined based on a user configuration operation.

In some embodiments, the historical interaction information is first historical interaction information, and the apparatus 600 further includes a replacing module configured to: receive an operation for replacing a first interactive resource in the set of interactive resources with a second interactive resource; and determine the visual content corresponding to the target virtual resource based on second historical interaction information, the second historical interaction information being associated with the replaced set of interactive resources.

In some embodiments, the set of interactive resources includes a plurality of preset interactive resources.

In some embodiments, the plurality of preset interactive resources are associated with a same theme.

In some embodiments, the target condition indicates that a number of historical interactions of each interactive resource in the set of interactive resources reaches a threshold number.

In some embodiments, the apparatus 600 further includes a first interactive module configured to: provide a first interactive entry in the target interface, the first interactive entry being associated with a third interactive resource in the set of interactive resources; and trigger a first interactive event in the target live stream based on a selection of the first interactive entry, the first interactive event being associated with the third interactive resource.

In some embodiments, the apparatus 600 further includes a second interactive module configured to: provide, in response to the historical interaction information associated with the set of interactive resources not satisfying the target condition, a second interactive entry in the target interface; trigger a second interactive event in the target live stream based on a selection of the second interactive entry, the second interactive event causing the historical interaction information associated with the set of interactive resources to satisfy the target condition; and update the visual content corresponding to the target virtual resource.

In some embodiments, the apparatus 600 further includes a sending module configured to: send, in response to the historical interaction information associated with the set of interactive resources satisfying the target condition, a first message associated with the target virtual resource in the target live stream.

In some embodiments, the target interface further includes a sharing entry, and the apparatus 600 further includes a sharing module configured to, based on a selection of the sharing entry: send a second message associated with the target virtual resource in the target live stream; post a work associated with the target virtual resource; or generate an image associated with the target virtual resource.

In some embodiments, the image presents at least one of the following: the visual content corresponding to the target virtual resource, the set of interactive resources associated with the target virtual resource, the historical interaction information associated with the set of interactive resources, and an access entry for accessing a viewing interface of the target virtual resource.

In some embodiments, the second message is further configured to guide to the viewing interface of the target virtual resource.

In some embodiments, the apparatus 600 further includes a reminding module configured to: display a resource panel, the resource panel displaying a plurality of interactive resources; and display prompt information in the resource panel based on a selection of a fourth interactive resource from the plurality of interactive resources, the fourth interactive resource being associated with the target virtual resource, the prompt information indicating a completion state of the target condition associated with the target virtual resource.

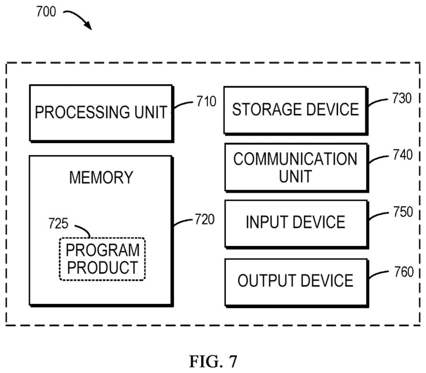

Fig. 7 shows a block diagram of an electronic device 700 in which one or more embodiments of the disclosure may be implemented. It should be appreciated that the electronic device 700 shown in Fig. 7 is only illustrative and should not constitute any limitation to the functionality and scope of the embodiments described herein. The electronic device 700 shown in Fig. 7 may be used to implement the electronic device 110 of Fig. 1.

As shown in Fig. 7, the electronic device 700 is in the form of a general-purpose electronic device. The components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor and may execute various processes based on the programs stored in the memory 720. In a multi-processor system, multiple processing units execute computer executable instructions in parallel to improve the parallel processing capability of the electronic device 700.

The electronic device 700 typically includes multiple computer storage medium. Such medium may be any available medium accessible to the electronic device 700, including, but not limited to, volatile and non-volatile medium, removable and non-removable medium. The memory 720 may be volatile memory (for example, a register, cache, Random Access Memory (RAM)), a non-volatile memory (such as a Read-Only Memory (ROM), Electrically Erasable Programmable Read-Only Memory (EEPROM), a flash memory), or any combination thereof. The storage device 730 may be any removable or non-removable medium, and may include a machine readable medium such as a flash drive, a disk, or any other medium, which may be used to store information and/or data and may be accessed within the electronic device 700.

The electronic device 700 may further include additional removable/non-removable, volatile/non-volatile memory medium. Although not shown in Fig. 7, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 720 may include a computer program product 725 having one or more program modules configured to perform various methods or acts of the various embodiments of the disclosure.

The communication unit 740 implements communication with other electronic devices through the communication medium. Additionally, the functions of the components of the electronic device 700 may be implemented by a single computing cluster or multiple computing machines, which may communicate through communication connections. Therefore, the electronic device 700 may use a logical connection with one or more other servers, network personal computers (PCs) or another network node to operate in a networked environment.

The input device 750 may be one or more input devices, such as a mouse, a keyboard, a tracking ball, and the like. The output device 760 may be one or more output devices, such as a display, a speaker, a printer, and the like. The electronic device 700 may also communicate with one or more external devices (not shown) through the communication unit 740 as needed, the external devices such as a storage device, a display device, and the like, communicate with one or more devices that enable the user to interact with the electronic device 700, or communicate with any devices (such as a network card, a modem, and the like) that enable the electronic device 700 to communicate with one or more other electronic devices. Such communication may be performed via input/output (I/O) interfaces (not shown).

According to an illustrative embodiment of the disclosure, there is provided a computer-readable storage medium having computer executable instructions stored thereon, where the computer executable instructions are executed by a processor to implement the method described above. According to an illustrative embodiment of the disclosure, there is further provided a computer program product tangibly stored on a non-transitory computer-readable medium and including computer executable instructions, and the computer executable instructions are executed by a processor to implement the method described above.

Various aspects of the disclosure are described herein with reference to flowcharts and/or block diagrams of methods, apparatuses, devices and computer program products implemented according to the disclosure. It should be appreciated that each block of the flowcharts and/or block diagrams, and combinations of blocks in the flowcharts and/or block diagrams, may be implemented by computer-readable program instructions.

These computer-readable program instructions may be provided to a processing unit of a general-purpose computer, a special-purpose computer, or other programmable data processing apparatus to produce a machine, such that these instructions, when executed by the processing unit of the computer or other programmable data processing apparatus, produce an apparatus for implementing functions/actions specified in one or more blocks of the flowcharts and/or block diagrams. These computer-readable program instructions may also be stored in a computer-readable storage medium, these instructions cause the computer, the programmable data processing apparatus, and/or other devices to work in a specific manner, and thus, the computer-readable medium storing the instructions includes a manufactured product, which includes instructions for implementing various aspects of the functions/actions specified in one or more blocks of the flowcharts and/or block diagrams.

The computer-readable program instructions may be loaded onto a computer, other programmable data processing apparatus, or other device, so that a series of operation steps are performed on the computer, other programmable data processing apparatus, or other device to produce a computer-implemented process, which causes the instructions executed on the computer, other programmable data processing apparatus, or other device to implement the functions/actions specified in one or more blocks of the flowcharts and/or block diagrams.

The flowchart and block diagrams in the drawings show the possibly implemented architectures, functions and operations of the system, the method and the computer program product according to multiple embodiments of the disclosure. In this regard, each block in the flowchart or block diagram may represent a module, program segment or part of instructions, and the module, program segment or part of instructions contains one or more executable instructions for implementing the specified logical functions. In some alternative embodiments, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagrams and/or flowcharts, and combinations of the blocks in the block diagrams and/or flowcharts, may be implemented by a special-purpose hardware-based system that perform specified functions or actions, or may be implemented by a combination of special-purpose hardware and computer instructions.

The embodiments of the disclosure have been described above, and the above description is illustrative, non-exhaustive, and not limited to the disclosed embodiments. Many modifications and variations will be apparent to those of ordinary skill in the art without departing from the scope and spirit of the described embodiments. The terminology used herein is chosen to best explain the principles of the embodiments, the practical applications or improvements to the technology in the market, or to enable other those of ordinary skill in the art to understand the embodiments disclosed herein.

## Claims

1. A method for interaction, comprising:
displaying a target interface associated with a target virtual resource, the target interface displaying a set of interactive resources associated with the target virtual resource, the set of interactive resources being configured for interaction in a live stream; and
updating a visual content corresponding to the target virtual resource in response to historical interaction information associated with the set of interactive resources satisfying a target condition.

2. The method of claim 1, wherein the set of interactive resources is determined based on a user configuration operation.

3. The method of claim 2, wherein the historical interaction information is first historical interaction information, the method further comprising:
receiving an operation for replacing a first interactive resource in the set of interactive resources with a second interactive resource; and
determining the visual content corresponding to the target virtual resource based on second historical interaction information, the second historical interaction information being associated with the replaced set of interactive resources.

4. The method of claim 1, wherein the set of interactive resources comprises a plurality of preset interactive resources.

5. The method of claim 4, wherein the plurality of preset interactive resources are associated with a same theme.

6. The method of claim 4, wherein the target condition indicates that a number of historical interactions of each interactive resource in the set of interactive resources reaches a threshold number.

7. The method of claim 1, further comprising:
providing a first interactive entry in the target interface, the first interactive entry being associated with a third interactive resource in the set of interactive resources; and
triggering a first interactive event in a target live stream based on a selection of the first interactive entry, the first interactive event being associated with the third interactive resource.

8. The method of claim 1, further comprising:
providing, in response to the historical interaction information associated with the set of interactive resources not satisfying the target condition, a second interactive entry in the target interface;
triggering a second interactive event in a target live stream based on a selection of the second interactive entry, the second interactive event causing the historical interaction information associated with the set of interactive resources to satisfy the target condition; and
updating the visual content corresponding to the target virtual resource.

9. The method of claim 1, further comprising:
sending, in response to the historical interaction information associated with the set of interactive resources satisfying the target condition, a first message associated with the target virtual resource in a target live stream.

10. The method of claim 1, wherein the target interface further comprises a sharing entry, the method further comprising, based on a selection of the sharing entry:
sending a second message associated with the target virtual resource in a target live stream;
posting a work associated with the target virtual resource; or
generating an image associated with the target virtual resource.

11. The method of claim 10, wherein the image presents at least one of the following:
the visual content corresponding to the target virtual resource;
the set of interactive resources associated with the target virtual resource;
the historical interaction information associated with the set of interactive resources; and
an access entry for accessing a viewing interface of the target virtual resource.

12. The method of claim 10, wherein the second message is further configured to guide to a viewing interface of the target virtual resource.

13. The method of claim 1, further comprising:
displaying a resource panel, the resource panel displaying a plurality of interactive resources; and
displaying prompt information in the resource panel based on a selection of a fourth interactive resource from the plurality of interactive resources, the fourth interactive resource being associated with the target virtual resource, the prompt information indicating a completion state of the target condition associated with the target virtual resource.

14. An apparatus for interaction, comprising:
a displaying module configured to display a target interface associated with a target virtual resource, the target interface displaying a set of interactive resources associated with the target virtual resource, the set of interactive resources being configured for interaction in a live stream; and
an updating module configured to update a visual content corresponding to the target virtual resource in response to historical interaction information associated with the set of interactive resources satisfying a target condition.

15. An electronic device, comprising:
at least one processing unit; and
at least one memory, the at least one memory being coupled to the at least one processing unit and storing instructions executable by the at least one processing unit, the instructions, when executed by the at least one processing unit, causing the electronic device to perform the method of any of claims 1 to 13.

16. A computer-readable storage medium having a computer program stored thereon, the computer program being executable by a processor to perform the method of any of claims 1 to 13.
